# EUROPEAN PATENT APPLICATION

(11) **EP 3 872 335 A1**
(43) Date of publication of application: **01.09.2021**
(21) Application number: 20159302.7
(22) Date of filing: 25.02.2020
(51) Int. Cl.: F03D 7/02

(54) **WIND TURBINE OPERABLE IN A REVERSE MODE OF OPERATION AND CORRESPONDING METHOD OF OPERATING A WIND TURBINE**

(71) Applicant: Siemens Gamesa Renewable Energy A/S, 7330 Brande (DK)
(72) Inventor: Hawkins, Samuel H., 7100 Vejle (DK)
(74) Representative: Aspacher, Karl-Georg

(57) **Abstract**

A wind turbine (100) is described. The wind turbine (100) comprises a wind rotor (101) and a generator (108), mechanically coupled to the wind rotor (101). The wind turbine (100) is configured to operate in a first mode of operation and in a second mode of operation, wherein, in the second mode of operation, the wind rotor (101) is oriented in an opposite direction relative to a wind direction (104) compared with the first mode of operation. The generator (108) of the wind turbine (101) is configured to generate power both in the first mode of operation and in the second mode of operation. Furthermore, a corresponding method of operating a wind turbine (100) is described.

## Description

### Field of invention

The present invention relates to the technical field of wind turbines.

### Art Background

Horizontal axis wind turbines must orient their rotor plane in order to efficiently extract energy from the wind. An "upwind" wind turbine has a rotor plane that is normally oriented in front of the tower in the direction of the incoming wind during operation.

During periods of time without grid supply to a wind turbine, it is possible to continue to operate the wind turbine using an energy storage system. This has many benefits, including allowing the turbine to maintain its communication systems, maintain its internal environment, provide power to maintenance equipment and safety lights and beacons and to control its orientation in the event of extreme weather. The energy content of the energy storage system may be maintained while off-grid by operating the turbine (i.e. using the aerodynamic rotor to extract energy from the wind).

However, various problems may arise, when power for the wind turbine is supplied by the energy storage system. According to a first problem, there may be periods of time where the wind is too low to operate the wind turbine. During this period of time the energy content of the energy storage system may be depleted and operation of some systems may be disabled. For example, the yawing of the wind turbine in order to align the rotor with the incoming wind may be disabled. When the wind returns and is sufficient for operation, the energy storage system may not have sufficient energy content to yaw the wind turbine back into an upwind orientation if the wind direction has changed. This may lead to the energy storage system becoming fully depleted and requiring a visit by maintenance personnel.

According to a second problem, it may be favorable to purposely orient the rotor plane of the wind turbine "downwind" during an extreme wind event such as a hurricane or typhoon. This may be done to decrease the structural loading on the wind turbine and/or to place the turbine in a configuration with greater static stability. If the wind turbine is placed downwind while offgrid then it will not be able to maintain the state-of-charge of its energy storage system while in this configuration. This will limit the amount of time that the wind turbine is able to maintain this downwind orientation and effectively adjust the orientation for changes in wind direction.

Conventionally, in order to solve technical problems as those described above, an energy storage system is designed to have a sufficiently large storage capacity. To ensure that worst-case scenarios are accounted for, this storage capacity may need to be very large, thereby taking up extra space within the wind turbine and adding weight and cost.

Accordingly, there may be a need for a wind turbine and a method of operating a wind turbine enabling efficient energy management.

### Summary of the Invention

This need may be met by the subject matters according to the independent claims. Advantageous embodiments of the present invention are described by the dependent claims.

According to a first aspect of the invention, a wind turbine comprises a wind rotor and a generator, mechanically coupled to the wind rotor. The wind turbine is configured to operate in a first mode of operation and in a second mode of operation. In the second mode of operation, the wind rotor is oriented in an opposite direction relative to a wind direction compared with the first mode of operation. The generator of the wind turbine is configured to generate power both in the first mode of operation and in the second mode of operation.

According to a further aspect of the invention, a method of operating a wind turbine comprises operating the wind turbine in a second mode of operation and operating the wind turbine in a first mode of operation. In the second mode of operation, a wind rotor is oriented in an opposite direction relative to a wind direction compared with the first mode of operation. A generator of the wind turbine, which generator is mechanically coupled to the wind rotor, is configured to generate power both in the first mode of operation and in the second mode of operation.

In the context of the present application, a "wind turbine" is any device that is configured to convert wind energy into electrical energy, in particular for distribution to a grid and/or for local energy supply. A wind turbine may comprise a tower, a wind rotor, a nacelle, a shaft, in particular a low-speed shaft and/or a high-speed shaft, a gearbox, a generator, a brake assembly, a pitch drive, and/or a yaw drive. The wind rotor may be a rotor assembly and may comprise one or more blades and a central hub, to which the blades are attached. The wind rotor may further comprise a pitch bearing connecting the rotor hub with the blade. With the pitch bearing, an orientation of the blades may be adjustable, in particular an angle of attack of the blades.

The generator, which may be a generator assembly comprising one or more generator devices, may be configured to convert rotational kinetic energy of the wind rotor into electrical energy. Different generator devices may be provided for each mode of operation or the same generator device may be used for both modes of operation. The generator may be located in the nacelle of the wind turbine. It may be mechanically coupled with the wind rotor by means of one or more shafts and optionally a gearbox. The wind turbine may be a direct-drive wind turbine which does not require a gear box. The wind turbine may be an upwind wind turbine, aerodynamically configured for producing energy mainly in an upwind orientation of the rotor. It may also be a downwind turbine, aerodynamically configured for producing energy mainly in a downwind orientation of the rotor.

The "operation" of the wind turbine may refer to a state or succession of states in which the wind turbine converts kinetic wind energy into electrical energy. A "mode of operation" of the wind turbine may be determined by internal parameters and/or external parameters of the wind turbine. Internal parameters may characterize a state of the wind turbine, whereas external parameters may characterize a state of an environment of the wind turbine and/or a relationship between a state of the wind turbine and a state of the environment. A mode of operation of the wind turbine may be determined by at least one of a rotation direction of the wind rotor, a wind direction, a yaw angle of the wind turbine, and pitch angles of the blades of the wind turbine. The wind turbine, in particular the wind rotor, may be aerodynamically optimized for power generation in the first mode operation as opposed to the second mode of operation. The first mode of operation may be a normal mode of operation, the second mode of operation may be a safety or recovery mode of operation.

A "wind direction" may be defined as a wind direction at or close to the rotor of the wind turbine, in particular upwind from the rotor of the wind turbine. The wind direction may be defined as an incoming wind direction at a predetermined distance from the wind turbine, in particular at a distance, at which the rotor and/or other parts of the wind turbine do not significantly affect the incoming wind. The wind direction may be defined as the direction of the combined incoming and induced wind at the blades of the wind rotor, wherein the induced wind may be the wind induced by the rotor and/or other parts of the wind turbine at the blades of the rotor. The induced wind may be a wind component additional to the free undisturbed airflow.

The wind direction may be an average wind direction. It may be averaged over a plurality of locations in the vicinity of the wind turbine. Alternatively or additionally, it may be averaged over a given period of time. The wind direction may be defined in a reference system determined by the tower of the wind turbine and/or a ground to which the wind turbine is fixed. The wind direction may be the wind direction measured by an anemometer of the wind turbine, in particular an anemometer mounted to the nacelle or the tower of the wind turbine.

An "orientation relative to a wind direction" of the wind rotor may refer to the orientation of the rotor plane relative to the wind direction. It may refer to the orientation of a surface normal of the rotor plane relative to the wind direction. The surface normal of the rotor plane is defined as a surface normal which points towards the wind turbine, in particular towards the tower and/or nacelle of the wind turbine. The surface normal may be defined in a reference system given by the tower of the wind turbine and/or the ground to which the wind turbine is fixed. The orientation of the wind rotor may correlate with a yaw angle of the wind turbine, which may correspond to an angle between the nacelle and the tower.

An "orientation in opposite direction" in two modes of operation may be realized, if the wind rotor is oriented upwind in one mode of operation and oriented downwind in the other mode of operation. The wind rotor may be defined as being oriented "upwind", if and only if the scalar product of the wind direction and the surface normal of the rotor plane is positive. The wind rotor may be defined as being oriented "downwind", if and only if the scalar product of the wind direction and the surface normal of the rotor plane is negative. In the upwind orientation, the rotor of the wind turbine may be positioned upwind with respect to the tower. In the downwind orientation, the rotor of the wind turbine may be positioned downwind with respect to the tower.

Upwind orientation may be realized if and only if an angle between the wind direction and the surface normal is smaller than 90°, in particular smaller than 30°, in particular smaller than 8°. Equally, downwind orientation may be realized if and only if the angle between wind direction and surface normal is larger than 90°, in particular larger than 150°, in particular larger than 172°. The ranges of angles for downwind and upwind orientation may correspond, but need not correspond. An angle of up to 30° or more than 150°, in particular of up to 8° or more than 172°, may be required for efficient power generation due to the aerodynamic properties of the blades and/or for avoiding large structural loads. But power generation may in principle be possible for any orientation of the wind rotor, possibly excluding a fully perpendicular orientation of 90°.

An orientation in opposite direction relative to a wind direction may be defined in the following manner. In the second mode of operation, the wind rotor may be oriented in an opposite direction relative to a wind direction compared with the first mode of operation, if and only if, in the first mode of operation, an angle between the surface normal of the rotor plane and the wind direction is smaller than 90°, in particular smaller than 30°, in particular smaller than 8°, while, in the second mode of operation, the angle between the surface normal of the rotor plane and the wind direction is larger than 90°, in particular larger than 150°, in particular larger than 172°.

Alternatively, an orientation in opposite direction relative to a wind direction may be defined in the following manner. In the second mode of operation, the wind rotor may be oriented in an opposite direction relative to a wind direction compared with the first mode of operation, if and only if, in the first mode of operation, an angle of attack of a wind turbine blade is smaller than 180°, while, in the second mode of operation, the angle of attack of the wind turbine blade is larger than 180°.

Further alternatively, an orientation in opposite direction relative to a wind direction may be defined in the following manner. In the second mode of operation, the wind rotor may be oriented in an opposite direction relative to a wind direction compared with the first mode of operation, if and only if, in the second mode of operation, the wind causes the wind rotor to turn in an opposite direction compared with the first mode of operation. A rotational direction of the wind rotor may be defined with respect to a reference system determined by the nacelle and/or the generator of the wind turbine.

The feature that the generator is "configured to generate power" may only require that a rotor of the generator rotates with respect to a stator of the generator. It may further require that electrical energy is provided at an output of the generator. It may require that electrical energy is provided at the output in a form that can be fed into a grid and/or supplied to a supplementary energy supply. To this end, the electrical energy produced by the generator may for example be conditioned by power electronics.

The wind turbine and the method of operating a wind turbine as described above may be advantageous, because, in contrast to conventional horizontal-axis wind turbines, such a horizontal-axis wind turbine may remain operable even if the wind turbine is misaligned with respect to the wind. For example, an upwind wind turbine might be oriented downwind and still be able to generate some energy or a downwind wind turbine might be oriented upwind and still be able to generate some energy. In general, the above-described wind turbine may be capable of producing energy in any orientation with respect to the wind direction, except possibly if the rotor plane is approximately parallel to the wind direction.

The power generated in the misaligned orientation could be used for charging a supplementary energy source, for which a smaller capacity may be sufficient compared with conventional wind turbines. The generated power could be used for maintaining basic functionality of the wind turbine, even if the wind turbine is disconnected from a grid, for example maintaining a communication system, maintaining an internal environment, providing power to maintenance equipment, providing power to safety lights and/or beacons and controlling an orientation of the wind turbine, in particular a yaw orientation. This may be particularly useful in adverse weather conditions, for example if the wind speed is too high or too low for normal operation of the wind turbine. It may further be useful in situations, where normal operation of the wind turbine has been suspended due to technical problems, e.g. a system fault, or due to user commands.

According to an embodiment of the invention, in the second mode of operation, the generator generates power for a supplementary power supply, in particular only for the supplementary power supply and not for a grid. A "supplementary power supply" may be a power supply located in or near the wind turbine. The supplementary power supply may be an energy storage system. It may comprise a battery, in particular a rechargeable battery, or a hydrogen fuel cell. The battery may be rechargeable using power generated in the first mode of operation and/or the second mode of operation. Similarly, the store of hydrogen used for a fuel cell may be replenishable through hydrolysis using power generated in the first mode of operation and/or the second mode of operation. In the second mode of operation, the generator may generate power for the supplementary power supply only during certain periods of time or always.

Such an embodiment may be advantageous, since the supplementary power supply can be used to preserve basic functionality of the wind turbine, in particular when the wind turbine is disconnected from a grid. Power supplied by the supplementary power supply can for example be used to maintain a communication system of the wind turbine, to maintain an internal environment, e.g. to operate dehumidifiers, to provide power to maintenance equipment, to provide power to safety lights and/or beacons, and/or to control the orientation of the wind turbine.

According to a further embodiment of the invention, the supplementary power supply, in particular in combination with electrical wiring connected with the supplementary power supply, is configured to provide power for at least one of adjusting a pitch angle of a blade of the wind turbine and adjusting a yaw angle. The pitch angle of the blade may be adjusted in order to control at least one of an angular velocity of the wind rotor, a torque acting on the wind rotor, and a power generated by the generator.

Such an embodiment may be advantageous as it may allow to orient the wind turbine, in particular the rotor and/or the blades of the wind turbine, with respect to the wind direction. Orienting the wind turbine may allow to operate the wind turbine in the first mode of operation and/or in the second mode of operation. Orienting the wind turbine may allow to optimize power generation by the generator in the first mode of operation and/or the second mode of operation. Thus, the wind turbine may be capable of maintaining a sufficient energy content of the supplementary power supply in the first mode of operation and/or the second mode of operation.

According to a further embodiment of the invention, in the first mode of operation, the generator generates power for a grid. The grid may be an electrical grid or a power grid. It may be a network for delivering electricity from the wind turbine and other energy sources to consumers. It may comprise high voltage transmission lines to distribute power over long distances. In addition, the generator may also generate power for the supplementary power supply in the first mode of operation. The generator may, in the first mode of operation, always generate power for the grid and/or the supplementary power supply or only during respective periods of time.

Such an embodiment may be advantageous, if the first mode of operation is a normal mode of operation, in which the wind turbine may be optimized for supplying power to the grid, and the second mode of operation is a recovery or safety mode of operation, in which basic functionality of the wind turbine under adverse conditions may be preserved.

In an alternative embodiment, the generator is configured to generate power for the grid in the second mode of operation.

According to a further embodiment of the invention, the second mode of operation is a reverse mode of operation, in which the wind rotor of the wind turbine and/or a shaft coupled with the generator turns in an opposite direction compared with the first mode of operation. The direction may be a rotational direction defined with respect to a system of reference given by the generator and/or the nacelle of the wind turbine. A gearbox may be configured such that the rotor turns in an opposite direction, while a shaft directly connected with the generator turns in the same direction in both modes of operation.

Such an embodiment may be advantageous, since conventional wind turbines cannot operate in a reverse mode of operation as defined above. To design a wind turbine operable in a reverse mode, various technical prejudices had to be overcome, for example regarding the conditioning of power produced by the generator or with respect to particular stress on the drivetrain components, e.g. bearings or gears, during reverse operation.

In an alternative embodiment, the pitch angle of the rotor blades may be adjustable such that the wind rotor and/or the shaft coupled with the generator turn in the same direction in both the first and the second modes of operation.

In an alternative embodiment, an angle of attack of a blade of the wind rotor is smaller than 180° in the first mode of operation and is larger than 180° in the second mode of operation.

According to a further embodiment of the invention, a torque of the wind rotor in the first mode of operation is larger than, in particular at least twice as large as, a further torque of the wind rotor in the second mode of operation at a given wind speed, in particular at a given wind speed and a given pitch angle of the blades. The wind rotor, in particular the blades of the wind rotor, may be aerodynamically designed for the first mode of operation as opposed to the second mode of operation. The pitch angles of the blades may be adjustable to control the torque in both modes of operation. Such an embodiment may be advantageous because power may be generated in a mode of operation with comparably poor aerodynamic properties.

In an alternative embodiment, an angular velocity of the wind rotor in the first mode of operation is larger than, in particular at least twice as large as, a further angular velocity of the wind rotor in the second mode of operation at a given wind speed, in particular at a given wind speed and a given pitch angle of the blades.

According to a further embodiment of the invention, a power generated by the generator in the first mode of operation is larger than, in particular at least twice as large as, a power generated by the generator in the second mode of operation at a given wind speed, in particular at a given wind speed and a given pitch angle of the blades. The wind rotor may be aerodynamically designed for the first mode of operation as opposed to the second mode of operation. Such an embodiment may be advantageous, if the first mode of operation is a normal mode of operation, in which power may be mainly generated for the grid, whereas the second mode of operation is a recovery or safety mode of operation, in which comparably less power may be required mainly for preserving basic functionality of the wind turbine.

According to a further embodiment of the invention, the first mode of operation is an upwind mode of operation and the second mode of operation is a downwind mode of operation. An upwind mode of operation may be a mode of operation, in which the wind rotor is oriented upwind. A downwind mode of operation may be a mode of operation, in which the wind rotor is oriented downwind. Such an embodiment may be advantageous, if the wind turbine is an upwind wind turbine. Upwind wind turbines may be advantageous, because for downwind wind turbines, the loading from the wind changes as blades pass behind the supporting tower. Such change in loading can cause damage to the turbine.

In an alternative embodiment, the wind turbine is an upwind wind turbine.

According to a further embodiment of the invention, the first mode of operation is a downwind mode of operation and the second mode of operation is an upwind mode of operation. Such an embodiment may be advantageous, if the wind turbine is a downwind wind turbine. Downwind wind turbines may be advantageous, because in contrast to upwind wind turbines, they may not need an additional mechanism for keeping them in line with the wind. Also, the blades of downwind wind turbines can be allowed to bend in high winds reducing the swept area and thus the wind resistance.

In an alternative embodiment, the wind turbine is a downwind wind turbine.

According to a further embodiment of the invention, the method of operating the wind turbine further comprises orienting the wind rotor by means of power generated in the second mode of operation. The generated power may be stored in a supplementary energy supply and the stored energy may be used for orienting the wind rotor. Orienting the wind rotor may comprise at least one of adjusting a pitch angle of a blade and adjusting a yaw angle. Such an embodiment may for example be advantageous if the second mode of operation is a safety or recovery mode of operation, which may require orienting the wind rotor either to maintain a safety configuration or for recovery. It may require orienting the wind rotor, even if energy stored in the supplementary energy supply is insufficient.

According to a further embodiment of the invention, orienting the wind rotor comprises orienting the wind rotor such that the wind turbine is operable in the first mode of operation. Before the orienting, the wind rotor may be oriented such that the wind turbine is not operable in the first mode of operation. It may be oriented before the orienting such that the wind turbine is operable in the second mode of operation. The wind turbine may be disconnected from a grid before and/or during the orienting.

Such an embodiment may be advantageous in particular if the second mode of operation is a recovery mode of operation intended to return the wind turbine to normal operation in the first mode of operation after an adverse event such as too high winds, too low winds, a system fault and/or a user command.

Accordingly, this embodiment may provide a particularly effective solution to the first problem described in the background section above. During periods where operation of an upwind wind turbine is not possible, e.g. due to either wind too high, too low, a system fault, or user command, the wind turbine controller may stop yawing in order to conserve energy. If the possibility to operate returns while the wind turbine is oriented predominately in the downwind orientation, and the energy content of the energy storage system is insufficient to yaw to the upwind orientation and return to operation, then the wind turbine will commence downwind operation in order to restore the energy content of the energy storage system. When the energy content of the energy storage system is sufficiently high, the wind turbine will stop downwind operation, yaw to the upwind orientation, and resume normal upwind operation.

According to a further embodiment of the invention, orienting the wind rotor comprises orienting the wind rotor such that the wind turbine remains operable in the second mode of operation. The wind turbine may remain operable in the second mode of operation, when the wind direction changes. The wind turbine may remain operable in the second mode of operation under adverse weather conditions, in particular in high winds.

Such an embodiment may be advantageous in particular if the second mode of operation is a safety mode of operation intended for adverse conditions such as high winds. It may allow to keep the wind turbine in safety mode, while the adverse conditions remain.

Accordingly, this embodiment may provide a particularly effective solution to the second problem described in the background section above. While off grid, an upwind wind turbine may be placed in a downwind orientation for the purposes of reducing the likelihood of high structural loading during an extreme wind event, e.g. a hurricane or typhoon. To avoid depletion of the supplementary energy supply, the wind turbine will operate while downwind and produce power sufficient to maintain the energy content of the supplementary energy supply. This downwind operation will continue while wind speeds are within a range considered safe for operation. Once it is no longer desired for the wind turbine to be in the downwind orientation then downwind operation will stop and the turbine may yaw to the upwind orientation and resume normal upwind operation.

According to a further embodiment of the invention, the windturbine is disconnected from a grid while in the second mode of operation and/or while orienting the rotor. Such an embodiment may be advantageous, because the above described method of operating a wind turbine may be particularly useful when energy from the grid is unavailable to the wind turbine.

In an alternative embodiment, operating the wind turbine in the second mode of operation comprises generating power for a supplementary power supply of the wind turbine.

In an alternative embodiment, in the second mode of operation, power is generated for at least one of maintaining a communication system, maintaining an internal environment, in particular operating de-humidifiers, providing power to maintenance equipment, providing power to safety lights and/or beacons, and controlling the orientation of the wind rotor.

Some embodiments have been described with reference to apparatus type claims whereas other embodiments have been described with reference to method type claims. However, a person skilled in the art will gather from the above and the following description that, unless otherwise indicated, any combination of features relating to method type claims and of features relating to apparatus type claims, is disclosed with this document.

The aspects defined above and further aspects of the present invention are apparent from the examples of embodiment to be described hereinafter and are explained with reference to the examples of embodiment.

### Brief Description of the Drawings

Figure 1 shows a wind turbine operating in a first mode of operation according to an exemplary embodiment of the invention.
Figure 2 shows the wind turbine of Figure 1 operating in a second mode of operation.
Figure 3 shows a rotor blade profile in an upwind mode of operation of a wind turbine according to an exemplary embodiment of the invention.
Figure 4 shows the rotor blade profile of Figure 3 operating in a downwind mode of operation.

### Detailed Description

The illustrations in the drawings are schematic. In different drawings, similar or identical elements are provided with the same reference signs. For the sake of clarity and comprehensibility, reference signs are sometimes omitted for those features, for which reference signs have already been provided in earlier figures.

Before, referring to the drawings, exemplary embodiments will be described in further detail, some basic considerations will be summarized based on which exemplary embodiments of the invention have been developed.

A horizontal axis wind turbine is normally configured for upwind operation. The wind turbine may either intentionally orient itself to the downwind orientation, in particular by yawing, or it may arrive at the downwind orientation due to changing wind direction while it is out of operation.

While in a downwind orientation the wind turbine will actively adjust the blade pitch orientation in order to rotate the rotor of the wind turbine in a rotational direction opposite of the normal rotational direction, i.e. reverse, as viewed from the frame of reference of the wind turbine itself.

It is possible to produce torque in this configuration, where the angle of attack of the aerodynamic profile of the wind turbine blades is greater than 180 degrees. The amount of torque produced at a given wind speed will be much lower than when in normal upwind operation at the same wind speed, but still sufficient for the production of a small amount of power.

The pitch control of the rotor blades is used to regulate the rotational speed of the rotor and to accommodate changes in the wind speed. Yawing of the turbine will take place to maintain the orientation of the rotor downwind in the event of changing wind direction.

The generator of the wind turbine will extract energy out of the rotating rotor. It may be that the phase sequence of power generated is reversed. The power produced by the generator will be conditioned by power electronics such that it may be used for export to a consumer, e.g. grid or otherwise.

In a preferred embodiment of this invention, the wind turbine is equipped with an energy storage system. This energy storage system may be used while the wind turbine is off grid to provide power for the turbine to maintain its communication systems, maintain its internal environment (e.g. operate de-humidifiers), provide power to maintenance equipment, safety lights and beacons and to control yaw orientation in the event of extreme weather.

The wind turbine is capable of maintaining the energy content of the energy storage system, by operating in either the normal upwind orientation or in the downwind orientation.

Thus, a wind turbine designed for normal upwind operation can also be used for downwind operation. It is well known that turbines may be designed for either upwind or downwind operation, however, horizontal-axis wind turbines designed for operation in a certain orientation, so far, only operate in that one orientation.

It is only possible to produce small amounts of power when operating the rotor backwards in the downwind orientation. This is due to the very poor aerodynamic performance of the rotor when rotating backwards. However, with the growing use of energy storage systems in wind turbines it is useful to produce even a small amount of power for the purpose of maintaining the energy content of these systems.

Furthermore, the increased use of power electronics in wind turbines enables conditioning of power produced by the wind turbines generator. This allows the wind turbine to be able to export power to either the grid or an energy storage system with the correct phase sequence, even if operating in a direction which is reverse from normal.

Finally, reverse operation of a wind turbine may cause stress on the wind turbine's drivetrain components, i.e. bearings, gears, etc. However, this may be avoided if the amount of torque extracted from the rotor by the generator is very low, e.g. 10's to 100's of kWs for a turbine designed for multiple MW's of power, and so the impact on the drive train components would be negligible.

As opposed to operating a "normally upwind" turbine in the downwind orientation, the same solution could be applied to allow a "normally downwind" turbine to be operated in the upwind orientation. This would be beneficial for such a turbine for example in the case of a situation similar to the first problem described in the background section above.

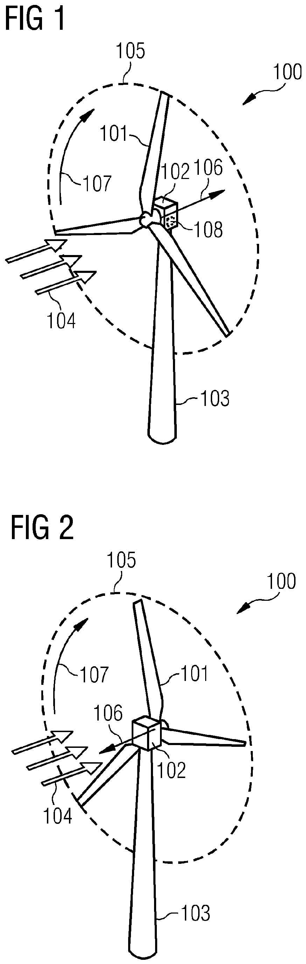

**Figure 1** shows a wind turbine 100 according to an exemplary embodiment of the invention. The wind turbine 100 comprises a wind rotor 101 with blades that turn in a rotation direction 107 within a rotor plane 105. A surface normal 106 of the rotor plane 105 points from the wind rotor 101 towards the nacelle 106 of the wind turbine 100. The wind turbine 100 is configured to operate in a first mode of operation and a second mode of operation. In this case, the first mode of operation is an upwind mode of operation, in which the rotor is arranged upwind from a tower 103 of the wind turbine 100 and in which the surface normal 106 is aligned with and points in the same direction as the incoming wind 104.

A generator of the wind turbine 100, which is mechanically coupled to the wind rotor 101 and may be arranged in the nacelle 102, is configured to generate power both in the first mode of operation and in the second mode of operation. In the second mode of operation, the wind rotor 101 is oriented in an opposite direction relative to the wind direction 104 compared with the first mode of operation. Thus, the second mode of operation may be a downwind mode of operation as shown in Figure 2.

**Figure 2** shows the wind turbine of Figure 1 operating in a second mode of operation. In this case, the second mode of operation is a downwind mode of operation, in which the rotor is arranged downwind from the tower 103 of the wind turbine 100 and in which the surface normal 106 is aligned with and points in a direction opposite to the incoming wind 104. Compared with the upwind mode of operation depicted in Figure 1, in the downwind mode of operation, the rotation direction 107 in the rotor plane 105 is opposite with respect to a frame of reference determined by the nacelle 102 and the generator 108 positioned in the nacelle 102.

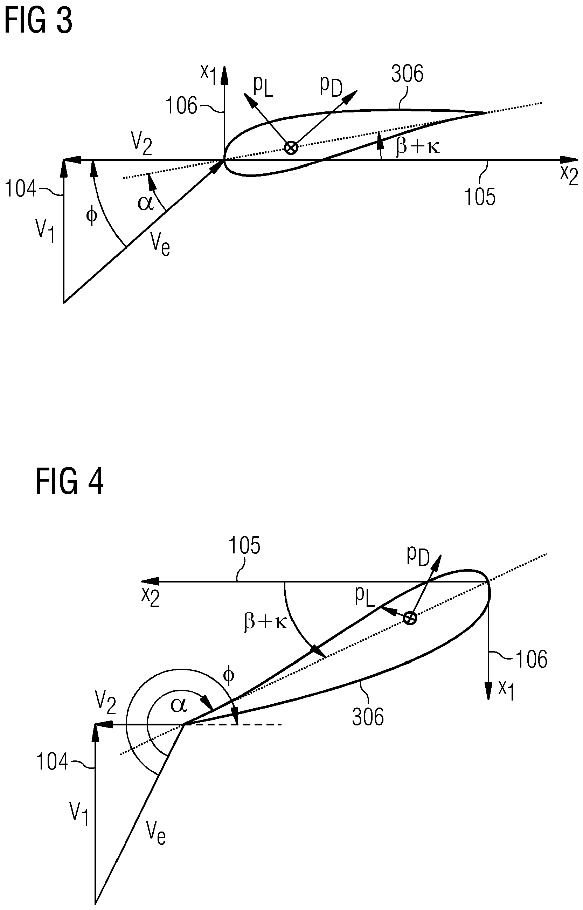

**Figure 3** shows the aerodynamic performance of a rotor blade profile 306 in an upwind mode of operation. The x₁ axis is oriented perpendicular to the rotor plane 105 in direction of the surface normal 106 and x₂ is along the rotor plane 105. V₁ represents the combined velocity of the incoming and induced wind speed 104 and V₂ is the linear velocity of the blade profile through the wind field. Vₑ is therefore the resultant relative wind velocity that acts at an angle ϕ (phi) relative to the rotor plane.

β (beta) represents the pitch angle of the rotor blade 306 while κ (kappa) represents the "pre-twist" of the blade 306 at the location of the profile cross-section. α (alpha) is the angle-of-attack of the blade profile 306 relative to the relative wind direction. The resultant forces p_{L} and p_{D} created by the wind and the motion of the blade profile are the lift force and drag force, respectively.

In normal operation the blade profile 306 creates sufficient lift such that the resultant force in the direction of the rotation V₂ is positive. This creates a rotor torque useful for generating electricity.

**Figure 4** shows the aerodynamic performance of the rotor blade profile 306 of Figure 3 in a downwind mode of operation. In the downwind mode of operation, it is similarly possible as in the upwind mode of operation to create and control rotor torque. Compared with the upwind mode of operation depicted in Figure 3, for a similar velocity V₁, the velocity V₂ will be much lower and the pitch angle β will need to be larger. Also, the angle of attack α is now greater than 180 degree.

In this configuration the drag force p_{D} will be large relative to the lift force p_{L}, but it will be predominately in a direction perpendicular to the rotor plane 105, whereas the small lift force p_{L} will be more aligned with the rotor plane 105 and therefore generating a small amount of rotational torque on the rotor.

Finally, the direction of rotation, V₂, is now opposite in the downwind operation orientation compared with the upwind orientation relative to the wind turbine's coordinate axes. For this reason, the rotation of the rotor is considered to be in reverse during this mode.

The rotational speed of the rotor can be controlled by actively adjusting the pitch angle β to produce more or less torque, as desired.

It should be noted that the term "comprising" does not exclude other elements or steps and the use of articles "a" or "an" does not exclude a plurality. Also, elements described for different embodiments may be combined. It should also be noted that reference signs in the claims should not be construed as limiting the scope of the claims.

## Claims

1. A wind turbine (100), comprising
a wind rotor (101); and
a generator (108), mechanically coupled to the wind rotor (101);
wherein the wind turbine (100) is configured to operate in a first mode of operation and in a second mode of operation, wherein, in the second mode of operation, the wind rotor (101) is oriented in an opposite direction relative to a wind direction (104) compared with the first mode of operation; wherein the generator (108) of the wind turbine (101) is configured to generate power both in the first mode of operation and in the second mode of operation.

2. The wind turbine (100) according to the preceding claim, wherein, in the second mode of operation, the generator (108) generates power for a supplementary power supply.

3. The wind turbine (100) according to the preceding claim, wherein the supplementary power supply is configured to provide power for at least one of adjusting a pitch angle of a blade (306) of the wind turbine (100) and adjusting a yaw angle.

4. The wind turbine (100) according to any one of the preceding claims, wherein, in the first mode of operation, the generator (108) generates power for a grid.

5. The wind turbine (100) according to any one of the preceding claims, wherein the second mode of operation is a reverse mode of operation, in which the wind rotor (101) of the wind turbine (100) and/or a shaft coupled with the generator (108) turns in an opposite direction (107) compared with the first mode of operation.

6. The wind turbine (100) according to any one of the preceding claims, wherein a torque of the wind rotor (101) in the first mode of operation is larger than, in particular at least twice as large as, a further torque of the wind rotor (101) in the second mode of operation at a given wind speed.

7. The wind turbine (100) according to any one of the preceding claims, wherein a power generated by the generator (108) in the first mode of operation is larger than, in particular at least twice as large as, a power generated by the generator (108) in the second mode of operation at a given wind speed.

8. The wind turbine (100) according to any one of the preceding claims, wherein the first mode of operation is an upwind mode of operation and the second mode of operation is a downwind mode of operation.

9. The wind turbine (100) according to any one of claims 1 to 7, wherein the first mode of operation is a downwind mode of operation and the second mode of operation is an upwind mode of operation.

10. A method of operating a wind turbine (100), the method comprising
operating the wind turbine (100) in a second mode of operation; and
operating the wind turbine (100) in a first mode of operation;
wherein, in the second mode of operation, a wind rotor (101) is oriented in an opposite direction relative to a wind direction (104) compared with the first mode of operation; wherein a generator (108) of the wind turbine (100), which is mechanically coupled to the wind rotor (101), is configured to generate power both in the first mode of operation and in the second mode of operation.

11. The method according to the preceding claim, further comprising
orienting the wind rotor (101) by means of power generated in the second mode of operation.

12. The method according to the preceding claim, wherein orienting the wind rotor (101) comprises orienting the wind rotor (101) such that the wind turbine (100) is operable in the first mode of operation.

13. The method according to any one of claims 11 or 12, wherein orienting the wind rotor (101) comprises orienting the wind rotor (101) such that the wind turbine (100) remains operable in the second mode of operation.

14. The method according to any one of claims 10 to 13, wherein the wind turbine (100) is disconnected from a grid while in the second mode of operation.
